(19) Europäisches Patentamt
European Patent Office
Office européen des brevets

(11) **EP 4 331 942 A1**

(12) **EUROPÄISCHE PATENTANMELDUNG**

(43) Veröffentlichungstag:
   **06.03.2024 Patentblatt 2024/10**

(21) Anmeldenummer: **23192628.8**

(22) Anmeldetag: **22.08.2023**

(51) Internationale Patentklassifikation (IPC):
   **B61L 15/00** (2006.01)    **G01P 15/08** (2006.01)
   **B61F 9/00** (2006.01)

(52) Gemeinsame Patentklassifikation (CPC):
   **B61L 15/0081; B61F 9/005; G01P 15/0891**

(84) Benannte Vertragsstaaten:
   **AL AT BE BG CH CY CZ DE DK EE ES FI FR GB GR HR HU IE IS IT LI LT LU LV MC ME MK MT NL NO PL PT RO RS SE SI SK SM TR**
   Benannte Erstreckungsstaaten:
   **BA**
   Benannte Validierungsstaaten:
   **KH MA MD TN**

(30) Priorität: **23.08.2022 AT 506482022**

(71) Anmelder: **Siemens Mobility Austria GmbH**
   **1210 Wien (AT)**

(72) Erfinder:
   • **Gruber, Horst**
     **8112 Gratwein (AT)**
   • **Koller, Andreas**
     **8733 Sankt Marein bei Knittelfeld (AT)**
   • **Raith, Philipp**
     **8045 Graz (AT)**

(74) Vertreter: **Siemens Patent Attorneys**
   **Postfach 22 16 34**
   **80506 München (DE)**

(54) **VERFAHREN UND VORRICHTUNG ZUR DETEKTION EINES ENTGLEISUNGSZUSTANDS EINES SCHIENENFAHRZEUGS**

(57)    Verfahren und Vorrichtung zur Detektion eines Entgleisungszustands, wobei zumindest eine kinematische Größe bezüglich eines ersten Radsatzendabschnitts (3) und eines zweiten Radsatzendabschnitts (4) gemessen wird und entsprechende Messsignale gebildet, verarbeitet sowie ausgewertet werden, wobei aus den Messsignalen Werte einer ersten Fallgeschwindigkeit ($v_{f1}$) bezüglich des ersten Radsatzendabschnitts (3) und Werte einer zweiten Fallgeschwindigkeit ($v_{f2}$) bezüglich des zweiten Radsatzendabschnitts (4) gebildet werden und mittels eines ersten Vergleichsvorgangs (6) der ersten Fallgeschwindigkeit ($v_{f1}$) und der zweiten Fallgeschwindigkeit ($v_{f2}$) mit einem ersten Fallgeschwindigkeitsgrenzwert ($v_{g1}$) und einem zweiten Fallgeschwindigkeitsgrenzwert ($v_{g2}$), welcher betragsmäßig größer ist als der erste Fallgeschwindigkeitsgrenzwert ($v_{g1}$), ein Entgleisungszustand des Schienenfahrzeugs detektiert wird.

Zur Reduktion von Fehlalarmen wird vorgeschlagen, dass zumindest die erste Fallgeschwindigkeit ($v_{f1}$) mittels eines ersten Integrationsvorgangs (8) einer Beschleunigung über eine vorgegebene Entgleisungsdauer ($t_e$) ermittelt wird, wobei die Entgleisungsdauer ($t_e$) als Vorgabewert in Abhängigkeit einer Fahrgeschwindigkeit eingestellt wird.

FIG 4

EP 4 331 942 A1

**Beschreibung**

Die Erfindung bezieht sich auf ein Verfahren zur Detektion eines Entgleisungszustands eines Schienenfahrzeugs, wobei zumindest eine kinematische Größe mittels eines ersten Sensors bezüglich eines ersten Radsatzendabschnitts und mittels eines zweiten Sensors bezüglich eines zweiten Radsatzendabschnitts gemessen wird und entsprechende Messsignale gebildet, verarbeitet sowie ausgewertet werden, wobei mittels zumindest einer Recheneinheit aus den Messsignalen Werte einer ersten Fallgeschwindigkeit bezüglich des ersten Radsatzendabschnitts und Werte einer zweiten Fallgeschwindigkeit bezüglich des zweiten Radsatzendabschnitts gebildet werden und mittels eines ersten Vergleichsvorgangs der ersten Fallgeschwindigkeit und der zweiten Fallgeschwindigkeit mit einem ersten Fallgeschwindigkeitsgrenzwert und einem zweiten Fallgeschwindigkeitsgrenzwert, welcher betragsmäßig größer ist als der erste Fallgeschwindigkeitsgrenzwert, ein Entgleisungszustand des Schienenfahrzeugs zumindest dann detektiert wird, wenn die erste Fallgeschwindigkeit betragsmäßig gleich oder größer ist als der erste Fallgeschwindigkeitsgrenzwert und die zweite Fallgeschwindigkeit betragsmäßig gleich oder größer ist als der zweite Fallgeschwindigkeitsgrenzwert.

Schienenfahrzeuge müssen eine hohe Fahrsicherheit aufweisen. Eine genaue Einschätzung und Vorhersage von technischen Zuständen von Fahrzeugen, Fahrwerken und weiteren Fahrzeugkomponenten ist daher wichtig. Insbesondere können Entgleisungen des Schienenfahrzeugs schwere Schäden an Menschen und Umwelt sowie an dem Schienenfahrzeug selbst verursachen, weshalb eine genaue und rechtzeitige Erkennung eines Entgleisungszustands des Schienenfahrzeugs bedeutsam ist.

Eine Unterscheidung eines normalbetrieblichen Zustands eines Schienenfahrzeugs von einem Entgleisungsvorgang des Schienenfahrzeugs ist kann herausfordernd sein, da Räder des Schienenfahrzeugs beispielsweise auf bestimmten Streckenabschnitten (z.B. im Bereich eines Bahnübergangs) nur langsam, über kurze Strecken oder nicht unmittelbar von Schienen fallen. Befährt das Schienenfahrzeug beispielsweise mit hoher Fahrgeschwindigkeit einen Gleisbogen mit einer Überhöhung, so vollziehen Räder des Schienenfahrzeugs auch in einem normalbetrieblichen Zustand starke Vertikalbewegungen in kurzer Zeit, welche mit einem Entgleisungsvorgang verwechselt werden und zu Fehlalarmen führen können. Ein Verfahren zur Entgleisungsdetektion muss auch in derartigen Streckenabschnitten (z.B. im Bereich eines Bahnübergangs oder eines überhöhten Gleisbogens etc.) eine Detektion eines Entgleisungszustands mit hoher Sicherheit ermöglichen.

Verfahren und Vorrichtungen zur Entgleisungsdetektion sind bedeutsam. Beispielsweise sind für einen automatischen Fahrbetrieb nach GoA 4 (Grade of Automation, Stufe 4) laut IEC (International Electrotechnical Commission) 62267 Mittel zur Entgleisungsdetektion vorgeschrieben.

Aus dem Stand der Technik ist beispielsweise die WO 2004/101343 A1 bekannt, in welcher ein Verfahren sowie eine Vorrichtung zur Detektion einer Entgleisung von Schienenfahrzeugrädern offenbart ist. Aus Messsignalen eines Beschleunigungssensors, welcher auf einem Radsatzlager eines Schienenfahrzeugs vorgesehen ist, werden mittels Integration Fallgeschwindigkeiten der Schienenfahrzeugräder ermittelt und eine Entgleisung dann detektiert, wenn eine Fallgeschwindigkeit einen definierten Grenzwert überschreitet. Weiterhin ist eine Detektion einer Entgleisung auch anhand eines Fallgeschwindigkeitsverlaufs vorgesehen. Dieser Ansatz weist in seiner bekannten Form den Nachteil ungenauer Detektionsergebnisse auf.

Weiterhin zeigt die DE 199 53 677 C1 ein Verfahren und eine Vorrichtung zur Entgleisungsdetektion bei einem Schienenfahrzeug, wobei mittels eines Beschleunigungssensors, welcher auf einem mit einem Radsatzlagergehäuse eines Fahrwerks des Schienenfahrzeugs verbundenen Bauteil angeordnet ist, Beschleunigungen vertikal und/oder quer zu einer Fahrtrichtung erfasst werden. Die Beschleunigungen werden mit Grenzwerten verglichen, wobei anhand einer Grenzwertverletzung eine Entgleisung detektiert wird.

Darüber hinaus ist in der WO 2020/089035 A1 ein Verfahren zur Entgleisungsdetektion bei einem Schienenfahrzeug offenbart, bei welchem Fallgeschwindigkeiten eines ersten Radsatzendabschnitts und eines zweiten Radsatzendabschnitts zur Detektion einer Entgleisung mit unterschiedlichen Grenzwerten verglichen werden.

Der Erfindung liegt daher die Aufgabe zugrunde, ein gegenüber dem Stand der Technik weiterentwickeltes Verfahren anzugeben, welches eine Detektion von Entgleisungszuständen eines Schienenfahrzeugs mit verbesserter Zuverlässigkeit ermöglicht.

Erfindungsgemäß wird diese Aufgabe gelöst mit einem Verfahren nach Anspruch 1, bei dem zumindest die erste Fallgeschwindigkeit mittels eines ersten Integrationsvorgangs einer Beschleunigung über eine vorgegebene Entgleisungsdauer ermittelt wird, wobei die Entgleisungsdauer als Vorgabewert in Abhängigkeit einer Fahrgeschwindigkeit eingestellt wird. Der erste Integrationsvorgang ist somit an die Fahrgeschwindigkeit anpassbar, wodurch ein normalbetriebliches Verhalten eines Schienenfahrzeugs besser von einem Verhalten des Schienenfahrzeugs in einem Entgleisungsvorgang unterschieden werden kann. Dadurch wird eine Reduktion von Fehlalarmen bei der Detektion von Entgleisungsvorgängen bewirkt. Dadurch kann ein Entgleisungsvorgang auch in Streckenabschnitten, in welchen eine Entgleisungsdetektion herausfordernd ist (z.B. im Bereich eines Bahnübergangs oder eines überhöhten Gleisbogens etc.) mit hoher Sicherheit erkannt werden.

Weitere vorteilhafte Ausgestaltungen des erfindungsgemäßen Verfahrens ergeben sich aus den Unteransprüchen.

Es ist beispielsweise günstig, wenn mittels der zumindest einen Recheneinheit aus den Messsignalen Werte eines ersten Fallwegs bezüglich des ersten Radsatzendabschnitts und Werte eines zweiten Fallwegs bezüglich des zweiten Radsatzendabschnitts gebildet werden und mittels eines zweiten Vergleichsvorgangs des ersten Fallwegs und des zweiten Fallwegs mit einem ersten Fallwegsgrenzwert und einem zweiten Fallwegsgrenzwert, welcher betragsmäßig kleiner ist als der erste Fallwegsgrenzwert, ein Entgleisungszustand des Schienenfahrzeugs zumindest dann detektiert wird, wenn der erste Fallweg betragsmäßig gleich oder größer ist als der erste Fallwegsgrenzwert und der zweite Fallweg betragsmäßig gleich oder größer ist als der zweite Fallwegsgrenzwert. Durch Einbeziehung von Fallwegen in das erfindungsgemäße Verfahren, d.h. des ersten Fallwegs bezüglich des ersten Radsatzendabschnitts und des zweiten Fallwegs bezüglich des zweiten Radsatzendabschnitts, wird eine Detektion eines Entgleisungszustands des Schienenfahrzeugs zusätzlich abgesichert. Das Risiko von Fehlalarmen im Hinblick auf eine Feststellung von Entgleisungszuständen wird weiter reduziert.

Eine Steigerung einer Detektionsgenauigkeit wird ferner erzielt, wenn ein Entgleisungszustand des Schienenfahrzeugs zumindest dann detektiert wird, wenn ein Erreichen oder ein Überschreiten des ersten Fallgeschwindigkeitsgrenzwerts und des zweiten Fallgeschwindigkeitsgrenzwerts durch die erste Fallgeschwindigkeit und die zweite Fallgeschwindigkeit innerhalb einer Übergangszeit oder innerhalb einer Übergangswegstrecke erfolgt.

Durch diese Maßnahme wird eine Kopplung einer Entgleisung eines ersten Rads eines Radsatzes mit einer Entgleisung eines zweiten Rads des Radsatzes berücksichtigt.

Hilfreich kann es auch sein, wenn zumindest der erste Integrationsvorgang in einem ersten Intervall der Fahrgeschwindigkeit mit einem ersten Wert der vorgegebenen Entgleisungsdauer durchgeführt wird.

Durch diese Maßnahme kann auf eine kontinuierliche Anpassung der vorgegebenen Entgleisungsdauer in Abhängigkeit der Fahrgeschwindigkeit verzichtet werden. Dadurch wird ein ressourcenschonender Umgang mit einer verfügbaren Rechnerkapazität erreicht.

Eine fahrgeschwindigkeitsabhängige Bewertung von Vibrationen zur Erkennung einer Entgleisung wird in das Verfahren einbezogen, wenn ein Entgleisungszustand des Schienenfahrzeugs zumindest dann detektiert wird, wenn zumindest ein Vibrationspegel gleich oder größer ist als ein fahrgeschwindigkeitsabhängig eingestellter Pegelgrenzwert.

Eine vorteilhafte Ausgestaltung erhält man, wenn eine Zwangsbremsung des Schienenfahrzeugs ausgelöst wird, wenn ein Entgleisungszustand des Schienenfahrzeugs detektiert wird. Durch diese Maßnahme wird eine möglichst rasche Wiederherstellung eines sicheren Zustands des Schienenfahrzeugs, seiner Insassen und seiner Fracht etc. erreicht.

Eine günstige Lösung wird erzielt, wenn Informationen über einen Entgleisungszustand des Schienenfahrzeugs mittels Funks von dem Schienenfahrzeug an eine infrastrukturseitige Einrichtung übertragen werden.

Durch diese Maßnahme können im Fall einer Entgleisung des Schienenfahrzeugs rasch Einsatzorganisationen zur Bergung des Schienenfahrzeugs, Versorgung von Insassen etc. aktiviert werden und Ersatzverkehre etc. eingerichtet werden.

Weiterhin kann es auch vorteilhaft sein, wenn Informationen über einen Entgleisungszustand des Schienenfahrzeugs an einen Führerstand des Schienenfahrzeugs übertragen und in dem Führerstand ausgegeben werden.

Durch diese Maßnahme wird auch ein Triebfahrzeugführer über die Entgleisung informiert.

Nachfolgend wird die Erfindung anhand von Ausführungsbeispielen näher erläutert.

Es zeigen beispielhaft:

Fig. 1: Ein Fahrwerk eines Schienenfahrzeugs mit einem ersten Sensor und einem zweiten Sensor sowie einen Wagenkasten des Schienenfahrzeugs mit einer Recheneinheit, wobei der erste Sensor und der zweite Sensor signalübertragend mit der Recheneinheit verbunden sind,

Fig. 2: Einen ersten Radsatz eines Schienenfahrzeugs während einer Entgleisung,

Fig. 3: Ein Flussdiagramm zu einer beispielhaften ersten Ausführungsvariante eines erfindungsgemäßen Verfahrens zur Detektion von Entgleisungszuständen eines Schienenfahrzeugs, und

Fig. 4: Ein Flussdiagramm zu einer beispielhaften zweiten Ausführungsvariante eines erfindungsgemäßen Verfahrens zur Detektion von Entgleisungszuständen eines Schienenfahrzeugs.

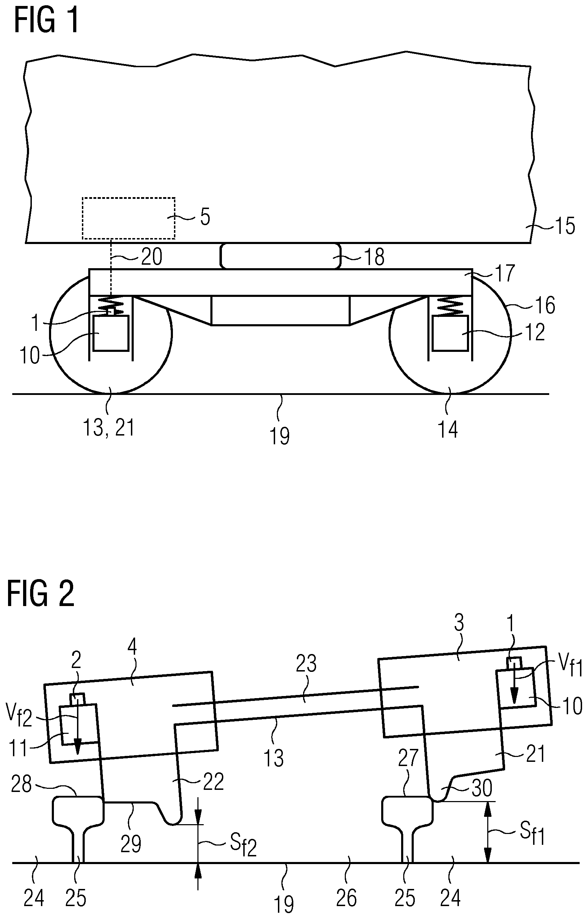

Fig. 1 zeigt ein beispielhaftes Schienenfahrzeug mit einem Fahrwerk 16 und einem Wagenkasten 15.

Das Fahrwerk 16 umfasst einen primärgefederten Fahrwerksrahmen 17, welcher über ein erstes Radsatzlager, welches ein erstes Radsatzlagergehäuse 10 aufweist und über ein zweites Radsatzlager, welches ein in Fig. 2 sichtbares zweites Radsatzlagergehäuse 11 aufweist, mit einem ersten Radsatz 13 sowie über ein drittes Radsatzlager, welches ein drittes Radsatzlagergehäuse 12 aufweist und über ein viertes Radsatzlager, welches ein viertes Radsatzlagergehäuse aufweist, mit einem zweiten Radsatz 14 verbunden ist.

Auf dem Fahrwerksrahmen 17 ist eine Sekundärfedervorrichtung 18 angeordnet, über welche das Fahrwerk 16 mit dem Wagenkasten 15 verbunden ist.

Auf dem ersten Radsatzlagergehäuse 10 ist ein erster Sensor 1 vorgesehen, auf dem zweiten Radsatzlagergehäuse 11 ein in Fig. 2 sichtbarer, zweiter Sensor 2. Weiterhin ist auf dem dritten Radsatzlagergehäuse 12 ein dritter Sensor angeordnet und auf dem vierten Radsatzlagergehäuse ein vierter Sensor, die jedoch nicht gezeigt sind.

Mittels des ersten Sensors 1 und des zweiten Sensors 2 werden Entgleisungen des ersten Radsatzes 13 festgestellt, mittels des dritten Sensors und des vierten Sensors Entgleisungen des zweiten Radsatzes 14.

Der erste Sensor 1, der zweite Sensor 2, der dritte Sensor und der vierte Sensor sind als piezoelektrische Beschleunigungssensoren ausgeführt, welche Beschleunigungen, d.h. eine kinematische Größe, des Schienenfahrzeugs in drei Raumrichtungen messen, wobei auch Beschleunigungen normal zu einer Schienenebene 19 erfasst werden.

Von dem ersten Sensor 1, dem zweiten Sensor 2, dem dritten Sensor und dem vierten Sensor gemessene Beschleunigungen werden als Messsignale über eine erste Kabelleitung 20, eine nicht sichtbare zweite Kabelleitung sowie, nicht dargestellt, eine dritte Kabelleitung und eine vierte Kabelleitung an eine in dem Wagenkasten 15, d.h. in einem Wagen angeordnete Recheneinheit 5 übertragen und darin zur Detektion von Entgleisungszuständen des Schienenfahrzeugs ausgewertet.

Der erste Sensor 1 ist über die erste Kabelleitung 20 mit der Recheneinheit 5 signalübertragend verbunden, der zweite Sensor 2 über die zweite Kabelleitung, der dritte Sensor über die dritte Kabelleitung und der vierte Sensor über die vierte Kabelleitung.

Die Recheneinheit 5 ist über ein nicht gezeigtes Bordstromnetz des Schienenfahrzeugs mit Elektrizität versorgt. Die Recheneinheit 5 wiederum versorgt über die erste Kabelleitung 20, die zweite Kabelleitung, die dritte Kabelleitung und die vierte Kabelleitung den ersten Sensor 1, den zweiten Sensor 2, den dritten Sensor und den vierten Sensor mit Elektrizität.

Erfindungsgemäß kann auch vorgesehen sein, dass eine Signalübertragung zwischen dem ersten Sensor 1, dem zweiten Sensor 2, dem dritten Sensor und dem vierten Sensor einerseits sowie der Recheneinheit 5 andererseits mittels einer Funkverbindung erfolgt.

In Fig. 2 ist ein beispielhafter erster Radsatz 13 eines Schienenfahrzeugs, welcher auch in Fig. 1 gezeigt ist, dargestellt.

Der erste Radsatz 13 weist ein erstes Rad 21 und ein zweites Rad 22 auf, welche über eine Radsatzwelle 23 miteinander verbunden sind. Zur Verbindung des ersten Radsatzes 13 mit einem in Fig. 1 dargestellten Fahrwerksrahmen 17 sind ein erstes Radsatzlager mit einem ersten Radsatzlagergehäuse 10 und ein zweites Radsatzlager mit einem zweiten Radsatzlagergehäuse 11 vorgesehen.

Auf dem ersten Radsatzlagergehäuse 10 ist ein erster Sensor 1 angeordnet, auf dem zweiten Radsatzlagergehäuse 11 ein zweiter Sensor 2. Der erste Sensor 1 und der zweite Sensor 2 sind als Beschleunigungssensoren ausgeführt und messen Beschleunigungen in drei Raumrichtungen, wodurch u.a. Beschleunigungen normal zu einer Schienenebene 19 erfasst werden. Der erste Sensor 1 misst Beschleunigungen bezüglich eines ersten Radsatzendabschnitts 3 bzw. bezüglich des ersten Radsatzlagergehäuses 10, der zweite Sensor 2 misst Beschleunigungen bezüglich eines zweiten Radsatzendabschnitts 4 bzw. bezüglich des zweiten Radsatzlagergehäuses 11.

Der erste Sensor 1 und der zweite Sensor 2 messen also eine kinematische Größe, nämlich die Beschleunigung bezogen auf den ersten Radsatzendabschnitt 3 und den zweiten Radsatzendabschnitt 4.

Der erste Radsatzendabschnitt 3 und der zweite Radsatzendabschnitt 4 sind Randabschnitte des ersten Radsatzes 13 und umfassen, in Längsrichtung des ersten Radsatzes 13 betrachtet, jeweils rund 30 % des ersten Radsatzes 13.

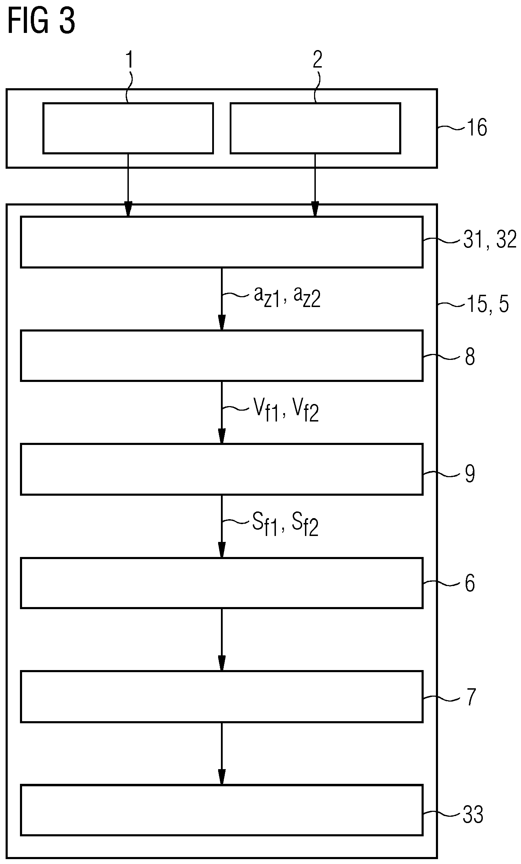

Aus Beschleunigungsmesssignalen des ersten Sensors 1 und des zweiten Sensors 2 werden in einer in Fig. 1 gezeigten Recheneinheit 5 mittels eines im Zusammenhang mit Fig. 3 beschriebenen ersten Integrationsvorgangs 8 Fallgeschwindigkeitswerte des ersten Radsatzes 13 bestimmt, nämlich Werte einer ersten Fallgeschwindigkeit $v_{f1}$ bezüglich des ersten Radsatzendabschnitts 3 bzw. des ersten Radsatzlagergehäuses 10 und Werte einer zweiten Fallgeschwindigkeit $v_{f2}$ bezüglich des zweiten Radsatzendabschnitts 4 bzw. des zweiten Radsatzlagergehäuses 11. Bei der ersten Fallgeschwindigkeit $v_{f1}$ und der zweiten Fallgeschwindigkeit $v_{f2}$ handelt es sich um Geschwindigkeiten normal zu der Schienenebene 19.

In Fig. 2 ist ein Entgleisungszustand des Schienenfahrzeugs dargestellt. Das erste Rad 21 entgleist in Richtung einer Außenseite 24 eines Gleises 25, das zweite Rad 22 in Richtung einer Innenseite 26 des Gleises 25.

Die erste Fallgeschwindigkeit $v_{f1}$ ist kleiner als die zweite Fallgeschwindigkeit $v_{f2}$, jedoch größer als ein erster Fallgeschwindigkeitsgrenzwert $v_{g1}$. Die zweite Fallgeschwindigkeit $v_{f2}$ überschreitet einen zweiten Fallgeschwindigkeitsgrenzwert $v_{g2}$, welcher größer ist als der erste Fallgeschwindigkeitsgrenzwert $v_{g1}$. Der zweite Fallgeschwindigkeitsgrenzwert $v_{g2}$ ist deshalb größer als der erste Fallgeschwindigkeitsgrenzwert $v_{g1}$, da das zweite Rad 22 auf das erste Rad 21, welches auf einen ersten Schienenkopf 27 aufklettert, folgend entgleist und da folglich auf das zweite Rad 22 eine größere Vorspannung einer Primärfederung wirkt als auf das erste Rad 21.

In der Recheneinheit 5 werden mittels eines im Zusammenhang mit Fig. 3 beschriebenen zweiten Integrationsvorgangs 9 aus den Werten der ersten Fallgeschwindigkeit $v_{f1}$ Werte eines ersten Fallwegs $s_{f1}$ und aus den Werten der zweiten Fallgeschwindigkeit $v_{f2}$ Werte eines zweiten Fallwegs $s_{f2}$ bestimmt.

Bei dem ersten Fallweg $s_{f1}$ handelt es sich um einen Weg des ersten Radsatzendabschnitts 3 bzw. des ersten Radsatzlagergehäuses 10 normal zu der Schienenebene 19, bei dem zweiten Fallweg $s_{f2}$ um einen Weg des zweiten Radsatzendabschnitts 4 bzw. des zweiten Radsatzlagergehäuses 11 normal zu der Schienenebene 19.

Da das erste Rad 21 mit dessen Spurkranz 30 auf den ersten Schienenkopf 27 aufklettert und erst anschließend hinab gleitet, während das zweite Rad 22 unmittelbar über dessen Lauffläche 29 von einem zweiten Schienenkopf 28 abgleitet, ist, am Ende einer Entgleisung des ersten Radsatzes 13, der insgesamt zurückgelegte erste Fallweg $s_{f1}$ größer als der insgesamt zurückgelegte zweite Fallweg $s_{f2}$. Entsprechend ist ein erster Fallwegsgrenzwert $s_{g1}$ größer definiert als ein zweiter Fallwegsgrenzwert $s_{g2}$.

In der Recheneinheit 5 werden ein auch im Zusammenhang mit Fig. 3 beschriebener erster Vergleichsvorgang 6 zum Vergleich der ersten Fallgeschwindigkeit $v_{f1}$ und der zweiten Fallgeschwindigkeit $v_{f2}$ mit dem ersten Fallgeschwindigkeitsgrenzwert $v_{g1}$ und dem zweiten Fallgeschwindigkeitsgrenzwert $v_{g2}$ sowie ein ebenfalls auch im Zusammenhang mit Fig. 3 erläuterter zweiter Vergleichsvorgang 7 zum Vergleich des ersten Fallwegs $s_{f1}$ und des zweiten Fallwegs $s_{f2}$ mit dem ersten Fallwegsgrenzwert $s_{g1}$ und dem zweiten Fallwegsgrenzwert $s_{g2}$ durchgeführt.

Ein Entgleisungszustand des ersten Radsatzes 13 bzw. des Schienenfahrzeugs wird dabei dann detektiert, wenn die erste Fallgeschwindigkeit $v_{f1}$ betragsmäßig gleich oder größer ist als der erste Fallgeschwindigkeitsgrenzwert $v_{g1}$, die zweite Fallgeschwindigkeit $v_{f2}$ betragsmäßig gleich oder größer ist als der zweite Fallgeschwindigkeitsgrenzwert $v_{g2}$, der erste Fallweg $s_{f1}$ betragsmäßig gleich oder größer ist als der erste Fallwegsgrenzwert $s_{g1}$ und der zweite Fallweg $s_{f2}$ betragsmäßig gleich oder größer ist als der zweite Fallwegsgrenzwert $s_{g2}$.

Bei Einbeziehung des zweiten Vergleichsvorgangs 7 handelt es sich um eine besonders günstige Lösung. Erfindungsgemäß ist es jedoch auch denkbar, auf eine Bestimmung und Auswertung des ersten Fallwegs $s_{f1}$ und des zweiten Fallwegs $s_{f2}$ zu verzichten und einen Entgleisungszustand des Schienenfahrzeugs ausschließlich auf Grundlage des ersten Vergleichsvorgangs 6, d.h. auf Grundlage von Fallgeschwindigkeiten, zu detektieren.

Das erfindungsgemäße Verfahren ist selbstverständlich auch dazu eingerichtet, einen Entgleisungszustand des Schienenfahrzeugs zu detektieren, bei welchem das zweite Rad 22 in Richtung der Außenseite 24 des Gleises 25 entgleist und das erste Rad 21 in Richtung der Innenseite 26 des Gleises 25.

Fig. 3 offenbart ein Flussdiagramm einer beispielhaften ersten Ausführungsvariante eines erfindungsgemäßen, teilweise computerimplementierten Verfahrens zur Entgleisungsdetektion für ein Schienenfahrzeug.

Von einem ersten Sensor 1 und einem zweiten Sensor 2, welche als Beschleunigungssensoren ausgeführt und, wie in Fig. 1 bzw. Fig. 2 gezeigt, auf einem Fahrwerk 16 des Schienenfahrzeugs angeordnet sind, werden Beschleunigungen in alle Raumrichtungen, d.h. auch normal zu einer, ebenfalls in Fig. 1 bzw. Fig. 2 gezeigten Schienenebene 19 erfasst.

Diese Beschleunigungen beziehen sich, wie in Fig. 2 gezeigt, auf einen ersten Radsatzendabschnitt 3 eines ersten Radsatzes 13 mit einem ersten Rad 21 und einem zweiten Rad 22 sowie einen zweiten Radsatzendabschnitt 4 des ersten Radsatzes 13 und werden, wie in Fig. 1 dargestellt, als Messsignale über eine erste Kabelleitung 20 und eine zweite Kabelleitung an eine in einem Wagenkasten 15 des Schienenfahrzeugs angeordnete Recheneinheit 5 übertragen.

Der erste Sensor 1, der zweite Sensor 2, die erste Kabelleitung 20, die zweite Kabelleitung und die Recheneinheit 5 sind dazu eingerichtet, das Verfahren gemäß Fig. 3 durchzuführen.

In der Recheneinheit 5 erfolgt eine Signalverarbeitung 31 und eine Signalauswertung 32. Dabei werden aus den Messsignalen Beschleunigungsinformationen extrahiert und in Beschleunigungskomponenten, u.a. in eine Beschleunigungskomponente normal zu der Schienenebene 19 transformiert. Weiterhin werden über die Signalauswertung 32 die Messsignale gefiltert, um niederfrequente Störungen, welche beispielsweise von Drifterscheinungen und elektromagnetischen Einstreuungen verursacht sein können, zu eliminieren. Hierzu ist ein aus dem Stand der Technik bekannter Bessel- bzw. Hochpassfilter eingesetzt.

Von dem ersten Sensor 1 gemessene und auf den ersten Radsatzendabschnitt 3 bezogene Beschleunigungen normal zu der Schienenebene 19, erste z-Beschleunigungen $a_{z1}$, werden anschließend mittels eines ersten Integrationsvorgangs 8 nach einer ersten Bildungsvorschrift über eine Entgleisungsdauer $t_e$ integriert:

$$\int_{t_{01}}^{t_e} a_{z1} \cdot dt = \int_{v_{z01}}^{v_{f1}} dv_{z1}$$

Die erste Bildungsvorschrift umfasst neben der ersten z-Beschleunigung $a_{z1}$ und der Entgleisungsdauer $t_e$ weiterhin eine Zeit t, eine erste Startzeit $t_{01}$, eine erste z-Geschwindigkeit $v_{z1}$ des ersten Radsatzendabschnitts 3 normal zu der Schienenebene 19 sowie eine erste z-Startgeschwindigkeit $v_{z01}$ des ersten Radsatzendabschnitts 3 normal zu der Schienenebene 19. Die erste Startzeit $t_{01}$ und die erste z-Startgeschwindigkeit $v_{z01}$ werden entsprechend eingesetzt, z.B. zu Beginn des erfindungsgemäßen Verfahrens mit $t_{01} = 0$ und $v_{z01} = 0$, wobei natürlich auch andere Startwerte denkbar sind.

Der erste Integrationsvorgang 8 bezieht sich weiterhin auch auf eine zweite Bildungsvorschrift, nach welcher von dem zweiten Sensor 2 erfasste und auf den zweiten Radsatzendabschnitt 4 bezogene Beschleunigungen normal zu der Schienenebene 19, zweite z-Beschleunigungen $a_{z2}$, integriert werden:

$$\int_{t_{02}}^{t_e} a_{z2} \cdot dt = \int_{v_{z02}}^{v_{f2}} dv_{z2}$$

Die zweite Bildungsvorschrift umfasst neben der zweiten z-Beschleunigung $a_{z2}$ und der Entgleisungsdauer $t_e$ weiterhin die Zeit t, eine zweite Startzeit $t_{02}$, eine zweite z-Geschwindigkeit $v_{z2}$ des zweiten Radsatzendabschnitts 4 normal zu der Schienenebene 19 sowie eine zweite z-Startgeschwindigkeit $v_{z02}$ des zweiten Radsatzendabschnitts 4 normal zu der Schienenebene 19. Die zweite Startzeit $t_{02}$ und die zweite z-Startgeschwindigkeit $v_{z02}$ werden entsprechend eingesetzt, z.B. zu Beginn des erfindungsgemäßen Verfahrens mit $t_{02} = 0$ und $v_{z02} = 0$, wobei natürlich auch andere Startwerte denkbar sind.

Bei der Entgleisungsdauer $t_e$ handelt es sich um eine vorgegebene bzw. antizipierende Größe, welche mittels vorgegebener, in der Recheneinheit 5 implementierter Zusammenhänge zwischen einer Fahrgeschwindigkeit des Schienenfahrzeugs und der Entgleisungsdauer $t_e$ als fahrgeschwindigkeitsabhängiger Vorgabewert eingestellt wird.
Diese Zusammenhänge werden mittels Simulationen und/oder Betriebsbeobachtungen aus einer Vielzahl von Analysen von Entgleisungsvorgängen von Schienenfahrzeugen gebildet. Die Zusammenhänge drücken eine Veränderung der Entgleisungsdauer $t_e$ in Abhängigkeit der Fahrgeschwindigkeit aus. Beispielsweise kann die Entgleisungsdauer $t_e$ mit zunehmender Fahrgeschwindigkeit sinken.

Ein erster Zusammenhang gibt vor, dass in einem ersten Intervall der Fahrgeschwindigkeit ein erster Wert der Entgleisungsdauer $t_e$ gilt (z.B. als Integrationszeitfenster bzw. -Grenze zur Durchführung des ersten Integrationsvorgangs 8), ein zweiter Zusammenhang gibt vor, dass in einem zweiten Intervall der Fahrgeschwindigkeit ein zweiter Wert der Entgleisungsdauer $t_e$ gilt usw. Fahrgeschwindigkeiten des ersten Intervalls sind kleiner als Fahrgeschwindigkeiten des zweiten Intervalls und der erste Wert der Entgleisungsdauer $t_e$ ist größer als der zweite Wert der Entgleisungsdauer $t_e$. Erfindungsgemäß ist es jedoch auch denkbar, dass der erste Wert der Entgleisungsdauer $t_e$ kleiner ist als der zweite Wert der Entgleisungsdauer $t_e$.

Aus der ersten Vorschrift wird eine auf den ersten Radsatzendabschnitt 3 bezogene erste Fallgeschwindigkeit $v_{f1}$ ermittelt.
Aus der zweiten Vorschrift wird eine auf den zweiten Radsatzendabschnitt 4 bezogene zweite Fallgeschwindigkeit $v_{f2}$ bestimmt.

Weiterhin erfolgt ein zweiter Integrationsvorgang 9, mittels dessen aus der ersten Fallgeschwindigkeit $v_{f1}$ ein erster Fallweg $s_{f1}$ und aus der zweiten Fallgeschwindigkeit $v_{f2}$ ein zweiter Fallweg $s_{f2}$ bestimmt werden.

Eine dritte Bildungsvorschrift zur Bestimmung des ersten Fallwegs $s_{f1}$ mittels zeitfreier Integration lautet folgendermaßen:

$$\int_{s_{z01}}^{s_{f1}} a_{z1} \cdot ds_{z1} = \int_{v_{z01}}^{v_{f1}} v_{z1} \cdot dv_{z1}$$

Neben aus der ersten Bildungsvorschrift bereits bekannten Parametern umfasst die dritte Bildungsvorschrift einen ersten z-Weg $s_{z1}$ normal zu der Schienenebene 19 sowie einen ersten z-Startweg $s_{z01}$ des ersten Radsatzendabschnitts 3 normal zu der Schienenebene 19 als Integrationsgrenze, welcher zu Beginn des erfindungsgemäßen Verfahrens $s_{z01} = 0$ gesetzt ist, wobei jedoch auch andere Startwerte denkbar sind.

Eine vierte Bildungsvorschrift zur Bestimmung des zweiten Fallwegs $s_{f2}$ mittels zeitfreier Integration lautet wie folgt:

$$\int_{s_{z02}}^{s_{f2}} a_{z2} \cdot ds_{z2} = \int_{v_{z02}}^{v_{f2}} v_{z2} \cdot dv_{z2}$$

Neben aus der zweiten Bildungsvorschrift und der dritten Bildungsvorschrift bereits bekannten Parametern umfasst die vierte Bildungsvorschrift einen zweiten z-Weg $s_{z2}$ des zweiten Radsatzendabschnitts 4 normal zu der Schienenebene 19 sowie einen zweiten z-Startweg $s_{z02}$ des zweiten Radsatzendabschnitts 4 normal zu der Schienenebene 19 als Integrationsgrenze, welcher zu Beginn des erfindungsgemäßen Verfahrens $s_{z02} = 0$ gesetzt ist, wobei jedoch auch andere Startwerte denkbar sind.

Erfindungsgemäß ist es auch vorstellbar, anstatt der zeitfreien Integrationen zur Bildung des ersten Fallwegs $s_{f1}$ und des zweiten Fallwegs $s_{f2}$, den ersten Fallweg $s_{f1}$ und den zweiten Fallweg $s_{f2}$ über zweifach-zeitliche Integrationen über die vorgegebene Entgleisungsdauer $t_e$ aus der ersten z-Beschleunigung $a_{z1}$ und der zweiten z-Beschleunigung $a_{z2}$ zu ermitteln.

Der erste Integrationsvorgang 8 mit der ersten Bildungsvorschrift und der zweiten Bildungsvorschrift sowie der zweite Integrationsvorgang 9 mit der dritten Bildungsvorschrift und der vierten Bildungsvorschrift werden mittels der Recheneinheit 5 numerisch durchgeführt, wobei für die erste z-Geschwindigkeit $v_{z1}$, die zweite z-Geschwindigkeit $v_{z2}$, den ersten z-Weg $s_{z1}$ und den zweiten z-Weg $s_{z2}$ je Zeitschritt Zwischenergebnisse gebildet werden, welche wiederum als erste z-Startgeschwindigkeit $v_{z01}$, zweite z-Startgeschwindigkeit $v_{z02}$, erster z-Startweg $s_{z01}$ und zweiter s-Startweg $s_{z02}$ für einen zeitlich auf einen ersten Integrationsdurchgang folgenden zweiten Integrationsdurchgang eingesetzt werden.

Oben genannte Zwischenergebnisse werden in dieser beispielhaften Ausführungsvariante eines erfindungsgemäßen Verfahrens auch zur Detektion von Entgleisungszuständen des Schienenfahrzeugs eingesetzt, d.h. mit einem ersten Fallgeschwindigkeitsgrenzwert $v_{g1}$, einem zweiten Fallgeschwindigkeitsgrenzwert $v_{g2}$, einem ersten Fallwegsgrenzwert $s_{g1}$ und einem zweiten Fallwegsgrenzwert $s_{g2}$ verglichen, und werden daher ebenfalls als erste Fallgeschwindigkeiten $v_{f1}$, zweite Fallgeschwindigkeiten $v_{f2}$, erste Fallwege $s_{f1}$ und zweite Fallwege $s_{f2}$ betrachtet.

Es wird ein erster Vergleichsvorgang 6 durchgeführt, bei welchem die erste Fallgeschwindigkeit $v_{f1}$ mit dem ersten Fallgeschwindigkeitsgrenzwert $v_{g1}$ sowie dem zweiten Fallgeschwindigkeitsgrenzwert $v_{g2}$ verglichen wird und die zweite Fallgeschwindigkeit $v_{f2}$ ebenfalls mit dem ersten Fallgeschwindigkeitsgrenzwert $v_{g1}$ sowie dem zweiten Fallgeschwindigkeitsgrenzwert $v_{g2}$ verglichen wird.

Der erste Fallgeschwindigkeitsgrenzwertwert $v_{g1}$ mit einem Betrag von 3 m/s bezieht sich, wie in Fig. 2 gezeigt, auf eine Entgleisung des ersten Rads 21 in Richtung einer Außenseite 24 eines Gleises 25, und ist kleiner als der zweite Fallgeschwindigkeitsgrenzwert $v_{g2}$, welcher sich, wie ebenfalls in Fig. 2 dargestellt, auf eine Entgleisung des zweiten Rads 22 in Richtung einer Innenseite 26 des Gleises 25 bezieht und 4 m/s beträgt.

Der erste Fallgeschwindigkeitsgrenzwert $v_{g1}$ und der zweite Fallgeschwindigkeitsgrenzwert $v_{g2}$ werden empirisch mittels Simulationen und/oder Betriebsbeobachtungen aus einer Vielzahl von Analysen von Entgleisungsvorgängen von Schienenfahrzeugen ermittelt. Abhängig von dem Schienenfahrzeug und dessen Betrieb sowie von einer Bahninfrastruktur können verschiedene Beträge, d.h. auch andere Beträge als die oben angeführten, für den ersten Fallgeschwindigkeitsgrenzwert $v_{g1}$ und den zweiten Fallgeschwindigkeitsgrenzwert $v_{g2}$ eingesetzt werden.

Darüber hinaus erfolgt ein zweiter Vergleichsvorgang 7, bei welchem der erste Fallweg $s_{f1}$ mit dem ersten Fallwegsgrenzwert $s_{g1}$ sowie dem zweiten Fallwegsgrenzwert $s_{g2}$ verglichen wird und der zweite Fallweg $s_{f2}$ ebenfalls mit dem ersten Fallwegsgrenzwert $s_{g1}$ und dem zweiten Fallwegsgrenzwert $s_{g2}$ verglichen wird. Der erste Fallwegsgrenzwert $s_{g1}$ beträgt in dieser beispielhaften Ausführungsvariante eines erfindungsgemäßen Verfahrens 210 mm und bezieht sich auf eine Entgleisung des ersten Rads 21 in Richtung der Außenseite 24 des Gleises 25, während sich der zweite Fallwegsgrenzwert $s_{g2}$, welcher in dieser beispielhaften Ausführungsvariante eines erfindungsgemäßen Verfahrens 180 mm beträgt, auf eine Entgleisung des zweiten Rads 22 in Richtung der Innenseite 26 des Gleises 25 bezieht.

Der zweite Fallwegsgrenzwert $s_{g2}$ ist aus einer Schienenhöhe bestimmt, der erste Fallwegsgrenzwert $s_{g1}$ darüber hinaus noch aus einer Rad-Spurkranzhöhe.

Abhängig von Schienenfahrzeug und Infrastruktur können natürlich auch andere Beträge als die oben angeführten für den ersten Fallwegsgrenzwert $s_{g1}$ und den zweiten Fallwegsgrenzwert $s_{g2}$ eingesetzt werden.

Die erste Fallgeschwindigkeit $v_{f1}$, die zweite Fallgeschwindigkeit $v_{f2}$ sowie der erste Fallweg $s_{f1}$ und der zweite Fallweg $s_{f2}$ definieren Bewegungen nach unten und sind mit positiven Vorzeichen definiert. Der erste Fallgeschwindigkeitsgrenzwert $v_{g1}$, der zweite Fallgeschwindigkeitsgrenzwert $v_{g2}$, der erste Fallwegsgrenzwert $s_{g1}$ und der zweite Fallwegsgrenzwert $s_{g2}$ sind ebenfalls mit positiven Vorzeichen definiert.

Ein Entgleisungszustand des Schienenfahrzeugs wird dann detektiert, wenn die erste Fallgeschwindigkeit $v_{f1}$ betragsmäßig gleich oder größer ist als der erste Fallgeschwindigkeitsgrenzwert $v_{g1}$, die zweite Fallgeschwindigkeit $v_{f2}$ betragsmäßig gleich oder größer ist als der zweite Fallgeschwindigkeitsgrenzwert $v_{g2}$, der erste Fallweg $s_{f1}$ betragsmäßig gleich oder größer ist als der erste Fallwegsgrenzwert $s_{g1}$ und der zweite Fallweg $s_{f2}$ betragsmäßig gleich oder größer ist als der zweite Fallwegsgrenzwert $s_{g2}$.

Demzufolge wird ein Entgleisungszustand des Schienenfahrzeugs auch dann detektiert, wenn neben der zweiten Fallgeschwindigkeit $v_{f2}$ auch die erste Fallgeschwindigkeit $v_{f1}$ betragsmäßig gleich oder größer ist als der zweite Fallgeschwindigkeitsgrenzwert $v_{g2}$ und/oder neben dem ersten Fallweg $s_{f1}$ auch der zweite Fallweg $s_{f2}$ gleich oder größer ist als der erste Fallwegsgrenzwert $s_{g1}$.

Über den ersten Vergleichsvorgang 6 bzw. den zweiten Vergleichsvorgang 7 hinaus muss für eine Detektion eines Entgleisungszustands des Schienenfahrzeugs ein Erreichen bzw. Überschreiten des ersten Fallgeschwindigkeitsgrenzwerts $v_{g1}$ und des zweiten Fallgeschwindigkeitsgrenzwerts $v_{g2}$ bzw. des ersten Fallwegsgrenzwerts $s_{g1}$ und des zweiten Fallwegsgrenzwerts $s_{g2}$ durch die erste Fallgeschwindigkeit $v_{f1}$ und die zweite Fallgeschwindigkeit $v_{f2}$ bzw. den ersten Fallweg $s_{f1}$ und den zweiten Fallweg $s_{f2}$ innerhalb einer Übergangszeit $t_u$ und innerhalb einer mit der Übergangszeit $t_u$ korrelierenden Übergangswegstrecke $s_u$ des Schienenfahrzeugs erfolgen. Eine Entgleisung des ersten Rads 21 muss demnach mit einer Entgleisung des zweiten Rads 22 zeitlich und örtlich gekoppelt sein.

Die Übergangszeit $t_u$ wird empirisch mittels Simulationen und/oder Betriebsbeobachtungen aus einer Vielzahl von Analysen von Entgleisungsvorgängen von Schienenfahrzeugen ermittelt. Die Übergangswegstrecke $s_u$ wird aus Multiplikation der Fahrgeschwindigkeit des Schienenfahrzeugs mit der Übergangszeit $t_u$ ermittelt.

In dieser beispielhaften Ausführungsvariante eines erfindungsgemäßen Verfahrens wird eine Übergangszeit $t_u$ von 10 s eingesetzt, wobei erfindungsgemäß auch andere Beträge für die Übergangszeit $t_u$ denkbar sind.

Sind beispielsweise sowohl die erste Fallgeschwindigkeit $v_{f1}$ als auch die zweite Fallgeschwindigkeit $v_{f2}$ kleiner als der zweite Fallgeschwindigkeitsgrenzwert

$v_{g2}$ und/oder sowohl der erste Fallweg $s_{f1}$ als auch der zweite Fallweg $s_{f2}$ kleiner als der erste Fallwegsgrenzwert $s_{g1}$, so liegt kein Entgleisungszustand des Schienenfahrzeugs vor und wird kein Entgleisungszustand detektiert.

Weiterhin liegt beispielsweise kein Entgleisungszustand vor und wird kein Entgleisungszustand detektiert, wenn die erste Fallgeschwindigkeit $v_{f1}$ oder die zweite Fallgeschwindigkeit $v_{f2}$ kleiner ist als der erste Fallgeschwindigkeitsgrenzwert $v_{g1}$ und/oder der erste Fallweg $s_{f1}$ oder der zweite Fallweg $s_{f2}$ kleiner ist als der zweite Fallwegsgrenzwert $s_{g2}$.

Es ist natürlich möglich, dass jene Seite des ersten Radsatzes 13 mit dem ersten Radsatzendabschnitt 3 bzw. das erste Rad 21 in Richtung der Innenseite 26 des Gleises 25 entgleist und jene Seite des ersten Radsatzes 13 mit dem zweiten Radsatzendabschnitt 4 bzw. das zweite Rad 22 in Richtung der Außenseite 24 des Gleises 25, d.h. umgekehrt, wie für diese beispielhafte Ausführungsvariante eines erfindungsgemäßen Verfahrens dargestellt. Zur Überprüfung eines derartigen Szenarios, welche in dem erfindungsgemäßen Szenario ebenfalls immer durchgeführt wird, wird der zweite Radsatzendabschnitt 4 als der erste Radsatzendabschnitt 3 betrachtet und der erste Radsatzendabschnitt 3 als der zweite Radsatzendabschnitt 4. Die Überprüfung dieses Szenarios wird nach jenem im Zusammenhang mit Fig. 3 beschriebenen Schema durchgeführt.

Bei Einbeziehung des zweiten Vergleichsvorgangs 7 in das erfindungsgemäße Verfahren handelt es sich um eine besonders günstige Lösung. Erfindungsgemäß ist es jedoch auch denkbar, auf eine Bestimmung und Auswertung des ersten Fallwegs $s_{f1}$ und des zweiten Fallwegs $s_{f2}$ zu verzichten und einen Entgleisungszustand des Schienenfahrzeugs ausschließlich auf Grundlage des ersten Vergleichsvorgangs 6 zu detektieren.

Messungen der Beschleunigungen, die Signalverarbeitung 31, die Signalauswertung 32, der erste Integrationsvorgang 8, der zweite Integrationsvorgang 9, der erste Vergleichsvorgang 6, der zweite Vergleichsvorgang 7, für einzelne Verfahrensschritte erforderliche Datenübertragungen sowie eine Erzeugung von Informationen über einen etwaigen Entgleisungszustand des ersten Radsatzes 13 bzw. des Schienenfahrzeugs werden kontinuierlich während eines Betriebs des Schienenfahrzeugs mit einer Frequenz von 10 Hz durchgeführt.

Erfindungsgemäß ist es natürlich auch möglich, eine andere Frequenz vorzusehen, die Frequenz zu variieren oder unterschiedliche Verfahrensschritte mit unterschiedlichen Frequenzen durchzuführen.

Verfahrensschritte wie z.B. der erste Integrationsvorgang 8 und der zweite Integrationsvorgang 9 oder der erste Vergleichsvorgang 6 und der zweite Vergleichsvorgang 7 können zeitlich sequentiell oder zeitlich parallel durchgeführt werden.

Bei einem detektierten Entgleisungszustand wird eine Zwangsbremsung des Schienenfahrzeugs ausgelöst (Zwangsbremsauslösung 33). Hierzu ist die Recheneinheit 5 mit einer nicht gezeigten Bremsvorrichtung des Schienenfahrzeugs, für diese beispielhafte Ausführungsvariante eines erfindungsgemäßen Verfahrens mit einem Bremssteuergerät, verbunden.

Weiterhin weist das Schienenfahrzeug eine nicht dargestellte Fahrzeugantenne auf, mit welcher die Recheneinheit 5 verbunden ist und über welche Informationen über einen Entgleisungszustand des Schienenfahrzeugs an eine nicht gezeigte infrastrukturseitige Einrichtung, für diese beispielhafte Ausführungsvariante eines erfindungsgemäßen Verfahrens an eine Leitzentrale, übertragen werden.

Erfindungsgemäß ist es auch denkbar, die Recheneinheit 5 über entsprechende Leitungswege mit einer Ausgabeeinheit, d.h. z.B. mit einer Anzeige und/oder einem Audiosystem, in einem Führerstand des Schienenfahrzeugs zu verbinden und Informationen über einen Entgleisungszustand visuell und/oder akustisch an einen Triebfahrzeugführer auszugeben.

Das erfindungsgemäße Verfahren kann selbstverständlich sowohl für Schienenfahrzeuge mit Radsatz-Fahrwerken als auch für Schienenfahrzeuge mit Losrad-Fahrwerken bzw. Losradsätzen, wie sie beispielsweise für Niederflurstraßenbahnen vorgesehen sind, eingesetzt werden. Es ist keine mechanische Kopplung zwischen dem ersten Rad 21 und dem zweiten Rad 22 erforderlich.

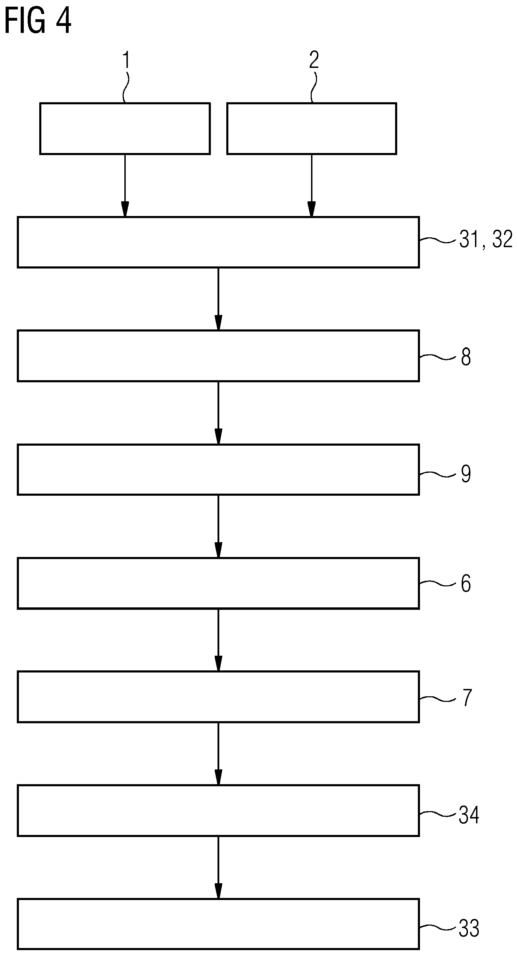

In Fig. 4 ist ein Flussdiagramm zu einer beispielhaften zweiten Ausführungsvariante eines erfindungsgemäßen Verfahrens zur Detektion von Entgleisungszuständen eines Schienenfahrzeugs dargestellt.

Diese beispielhafte zweite Ausführungsvariante ähnelt jener beispielhaften ersten Ausführungsvariante eines erfindungsgemäßen Verfahrens, welche in Fig. 3 gezeigt ist. Ein erster Sensor 1, ein zweiter Sensor 2 sowie, wie im Zusammenhang mit Fig. 1 beispielhaft beschrieben, eine erste Kabelleitung 20, eine zweite Kabelleitung und eine Recheneinheit 5 sind dazu eingerichtet, das Verfahren gemäß Fig. 4 durchzuführen.

Wie auch im Zusammenhang mit Fig. 3 für die beispielhafte erste Ausführungsvariante eines erfindungsgemäßen Verfahrens beschrieben, werden bei der beispielhaften zweiten Ausführungsvariante eines erfindungsgemäßen Verfahrens gemäß Fig. 4 auf Grundlage von Messungen des ersten Sensors 1 und des zweiten Sensors 2 Verfahrensschritte einer Signalverarbeitung 31, einer Signalauswertung 32, eines ersten Integrationsvorgangs 8, eines zweiten Integrationsvorgangs 9, eines ersten Vergleichsvorgangs 6 und eines zweiten Vergleichsvorgangs 7 durchgeführt.

Im Unterschied zu Fig. 3 ist in Fig. 4 auch ein Pegelvergleichsvorgang 34 dargestellt. Dieser Pegelvergleichsvorgang 34 wird nach dem zweiten Vergleichsvorgang 7 durchgeführt. Bei dem Pegelvergleichsvorgang 34 wird geprüft, ob in Bereichen eines ersten Radsatzlagergehäuses 10 und eines zweiten Radsatzlagergehäuses 11 des Schienenfahrzeugs, wie sie beispielhaft im Zusammenhang mit Fig. 1 und Fig. 2 beschrieben sind, gemessene Vibrationspegel (Schwing- und Schockpegel) gleich oder größer als ein fahrgeschwindigkeitsabhängig eingestellter Pegelgrenzwert sind. Die Vibrationspegel werden über den ersten Sensor 1 und den zweiten Sensor 2, welche als Beschleunigungssensoren ausgebildet sind, ermittelt.

Der Pegelgrenzwert wird über vorgegebene, in der Recheneinheit 5 implementierte Zusammenhänge fahrgeschwindigkeitsabhängig eingestellt. Die Zusammenhänge werden mittels Simulationen und/oder Betriebsbeobachtungen aus einer Vielzahl von Analysen von Entgleisungsvorgängen von Schienenfahrzeugen gebildet.

Die Zusammenhänge geben eine Veränderung des Pegelgrenzwerts in Abhängigkeit der Fahrgeschwindigkeit vor. Beispielsweise kann der Pegelgrenzwert mit zunehmender Fahrgeschwindigkeit steigen.

Ein erster Zusammenhang gibt vor, dass in einem ersten Intervall der Fahrgeschwindigkeit ein erster Pegelgrenzwert gilt, ein zweiter Zusammenhang gibt vor, dass in einem zweiten Intervall der Fahrgeschwindigkeit ein zweiter Pegelgrenzwert gilt usw. Fahrgeschwindigkeiten des ersten Intervalls sind kleiner als Fahrgeschwindigkeiten des zweiten Intervalls und der erste Pegelgrenzwert ist kleiner als der zweite Pegelgrenzwert. Erfindungsgemäß ist es jedoch auch denkbar, dass der erste Pegelgrenzwert kleiner ist als der zweite Pegelgrenzwert.

Ein Entgleisungszustand des Schienenfahrzeugs wird dann detektiert, wenn die gemessenen Vibrationspegel gleich oder größer als der Pegelgrenzwert sind und wenn jene im Zusammenhang mit Fig. 3 beschriebenen Kriterien für eine Entgleisung bezüglich Fallgeschwindigkeiten und Fallwegen ebenfalls erfüllt sind.

Ist ein Entgleisungszustand detektiert, so erfolgt eine Zwangsbremsauslösung 33 in dem Schienenfahrzeug.

Liste der Bezeichnungen

| | |
|---|---|
| 1 | Erster Sensor |
| 2 | Zweiter Sensor |
| 3 | Erster Radsatzendabschnitt |
| 4 | Zweiter Radsatzendabschnitt |
| 5 | Recheneinheit |
| 6 | Erster Vergleichsvorgang |
| 7 | Zweiter Vergleichsvorgang |
| 8 | Erster Integrationsvorgang |
| 9 | Zweiter Integrationsvorgang |
| 10 | Erstes Radsatzlagergehäuse |
| 11 | Zweites Radsatzlagergehäuse |
| 12 | Drittes Radsatzlagergehäuse |
| 13 | Erster Radsatz |
| 14 | Zweiter Radsatz |
| 15 | Wagenkasten |
| 16 | Fahrwerk |

| | |
|---|---|
| 17 | Fahrwerksrahmen |
| 18 | Sekundärfedervorrichtung |
| 19 | Schienenebene |
| 20 | Erste Kabelleitung |
| 21 | Erstes Rad |
| 22 | Zweites Rad |
| 23 | Radsatzwelle |
| 24 | Außenseite |
| 25 | Gleis |
| 26 | Innenseite |
| 27 | Erster Schienenkopf |
| 28 | Zweiter Schienenkopf |
| 29 | Lauffläche |
| 30 | Spurkranz |
| 31 | Signalverarbeitung |
| 32 | Signalauswertung |
| 33 | Zwangsbremsauslösung |
| 34 | Pegelvergleichsvorgang |
| $v_{f1}$ | Erste Fallgeschwindigkeit |
| $v_{f2}$ | Zweite Fallgeschwindigkeit |
| $v_{g1}$ | Erster Fallgeschwindigkeitsgrenzwert |
| $v_{g2}$ | Zweiter Fallgeschwindigkeitsgrenzwert |
| $s_{f1}$ | Erster Fallweg |
| $s_{f2}$ | Zweiter Fallweg |
| $s_{g1}$ | Erster Fallwegsgrenzwert |
| $s_{g2}$ | Zweiter Fallwegsgrenzwert |
| $t_u$ | Übergangszeit |
| $s_u$ | Übergangswegstrecke |
| $t_e$ | Entgleisungsdauer |
| $a_{z1}$ | Erste z-Beschleunigung |
| $a_{z2}$ | Zweite z-Beschleunigung |
| $t$ | Zeit |
| $t_{01}$ | Erste Startzeit |
| $t_{02}$ | Zweite Startzeit |
| $v_{z1}$ | Erste z-Geschwindigkeit |
| $v_{z2}$ | Zweite z-Geschwindigkeit |
| $v_{z01}$ | Erste z-Startgeschwindigkeit |
| $v_{z02}$ | Zweite z-Startgeschwindigkeit |
| $s_{z1}$ | Erster z-Weg |
| $s_{z2}$ | Zweiter z-Weg |
| $s_{z01}$ | Erster z-Startweg |
| $s_{z02}$ | Zweiter z-Startweg |

**Patentansprüche**

1. Verfahren zur Detektion eines Entgleisungszustands eines Schienenfahrzeugs, wobei zumindest eine kinematische Größe mittels eines ersten Sensors bezüglich eines ersten Radsatzendabschnitts und mittels eines zweiten Sensors bezüglich eines zweiten Radsatzendabschnitts gemessen wird und entsprechende Messsignale gebildet, verarbeitet sowie ausgewertet werden, wobei mittels zumindest einer Recheneinheit (5) aus den Messsignalen Werte einer ersten Fallgeschwindigkeit ($v_{f1}$) bezüglich des ersten Radsatzendabschnitts (3) und Werte einer zweiten Fallgeschwindigkeit ($v_{f2}$) bezüglich des zweiten Radsatzendabschnitts (4) gebildet werden und mittels eines ersten Vergleichsvorgangs (6) der ersten Fallgeschwindigkeit ($v_{f1}$) und der zweiten Fallgeschwindigkeit ($v_{f2}$) mit einem ersten Fallgeschwindigkeitsgrenzwert ($v_{g1}$) und einem zweiten Fallgeschwindigkeitsgrenzwert ($v_{g2}$), welcher betragsmäßig größer ist als der erste Fallgeschwindigkeitsgrenzwert ($v_{g1}$), ein Entgleisungszustand des Schienenfahrzeugs zumindest dann detektiert wird, wenn die erste Fallgeschwindigkeit ($v_{f1}$) betragsmäßig gleich oder größer ist als der erste Fallgeschwindigkeitsgrenzwert ($v_{g1}$) und die zweite Fallgeschwindigkeit ($v_{f2}$) betragsmäßig gleich oder größer ist als der zweite Fallgeschwindigkeitsgrenzwert ($v_{g2}$), **dadurch gekennzeichnet, dass** zumindest die erste Fallgeschwindigkeit ($v_{f1}$) mittels eines ersten Integrationsvorgangs (8) einer Beschleunigung über eine vorgegebene Entgleisungsdauer ($t_e$) ermittelt wird, wobei die Entgleisungsdauer ($t_e$) als Vorgabewert in Abhängigkeit einer Fahrgeschwindigkeit eingestellt wird.

2. Verfahren nach Anspruch 1, **dadurch gekennzeichnet, dass** mittels der zumindest einen Recheneinheit (5) aus den Messsignalen Werte eines ersten Fallwegs ($s_{f1}$) bezüglich des ersten Radsatzendabschnitts (3) und Werte eines zweiten Fallwegs ($s_{f2}$) bezüglich des zweiten Radsatzendabschnitts (4) gebildet werden und mittels eines zweiten Vergleichsvorgangs (7) des ersten Fallwegs ($s_{f2}$) und des zweiten Fallwegs ($s_{f2}$) mit einem ersten Fallwegsgrenzwert ($s_{g1}$) und einem zweiten Fallwegsgrenzwert ($s_{g2}$), welcher betragsmäßig kleiner ist als der erste Fallwegsgrenzwert ($s_{g1}$), ein Entgleisungszustand des Schienenfahrzeugs zumindest dann detektiert wird, wenn der erste Fallweg ($s_{f1}$) betragsmäßig gleich oder größer ist als der erste Fallwegsgrenzwert ($s_{g1}$) und der zweite Fallweg ($s_{f2}$) betragsmäßig gleich oder größer ist als der zweite Fallwegsgrenzwert ($s_{g2}$).

3. Verfahren nach Anspruch 1 oder 2, **dadurch gekennzeichnet, dass** ein Entgleisungszustand des Schienenfahrzeugs zumindest dann detektiert wird, wenn ein Erreichen oder ein Überschreiten des ersten Fallgeschwindigkeitsgrenzwerts ($v_{g1}$) und des zweiten Fallgeschwindigkeitsgrenzwerts ($v_{g2}$) durch die erste Fallgeschwindigkeit ($v_{f1}$) und die zweite Fallgeschwindigkeit ($v_{f2}$) innerhalb einer Übergangszeit ($t_u$) oder innerhalb einer Übergangswegstrecke ($s_u$) erfolgt.

4. Verfahren nach Anspruch 2 oder 3, **dadurch gekennzeichnet, dass** ein Entgleisungszustand des Schienenfahrzeugs dann detektiert wird, wenn ein Erreichen oder ein Überschreiten des ersten Fallwegsgrenzwerts ($s_{g1}$) und des zweiten Fallwegsgrenzwerts ($s_{g2}$) durch den ersten Fallweg ($s_{f1}$) und den zweiten Fallweg ($s_{f2}$) innerhalb der Übergangszeit ($t_u$) oder innerhalb der Übergangswegstrecke ($s_u$) erfolgt.

5. Verfahren nach einem der Ansprüche 2 bis 4, **dadurch gekennzeichnet, dass** zumindest der erste Fallweg ($s_{f2}$) mittels eines zweiten Integrationsvorgangs (9) ermittelt wird.

6. Verfahren nach Anspruch 5, **dadurch gekennzeichnet, dass** der zweite Integrationsvorgang (9) als zeitfreie Integration durchgeführt wird.

7. Verfahren nach einem der Ansprüche 1 bis 6, **dadurch gekennzeichnet, dass** zumindest der erste Integrationsvorgang (8) in einem ersten Intervall der Fahrgeschwindigkeit mit einem ersten Wert der vorgegebenen Entgleisungsdauer ($t_e$) durchgeführt wird.

8. Verfahren nach einem der Ansprüche 1 bis 7, **dadurch gekennzeichnet, dass** ein Entgleisungszustand des Schienenfahrzeugs zumindest dann detektiert wird, wenn zumindest ein Vibrationspegel gleich oder größer ist als ein fahrgeschwindigkeitsabhängig eingestellter Pegelgrenzwert.

9. Verfahren nach einem der Ansprüche 1 bis 8, **dadurch gekennzeichnet, dass** eine Zwangsbremsung des Schienenfahrzeugs ausgelöst wird, wenn ein Entgleisungszustand des Schienenfahrzeugs detektiert wird.

10. Verfahren nach einem der Ansprüche 1 bis 9, **dadurch gekennzeichnet, dass** Informationen über einen Entgleisungszustand des Schienenfahrzeugs mittels Funks von dem Schienenfahrzeug an eine infrastrukturseitige Einrichtung übertragen werden.

11. Verfahren nach einem der Ansprüche 1 bis 10, **dadurch gekennzeichnet, dass** Informationen über einen Entgleisungszustand des Schienenfahrzeugs an einen Führerstand des Schienenfahrzeugs übertragen und in dem Führerstand ausgegeben werden.

12. Vorrichtung zur Detektion eines Entgleisungszustands eines Schienenfahrzeugs, welche dazu eingerichtet ist, ein Verfahren nach einem der Ansprüche 1 bis 11 durchzuführen, **dadurch gekennzeichnet, dass** zumindest zur Ermittlung zumindest einer ersten Fallgeschwindigkeit ($v_{f1}$) mittels eines ersten Integrationsvorgangs (8) einer Beschleunigung über eine als Vorgabewert in Abhängigkeit einer Fahrgeschwindigkeit eingestellte Entgleisungsdauer ($t_e$) zumindest ein erster Zusammenhang zwischen der Fahrgeschwindigkeit und der Entgleisungsdauer ($t_e$) in zumindest einer Recheneinheit (5) der Vorrichtung implementiert ist.

**13.** Vorrichtung nach Anspruch 12, **dadurch gekennzeichnet, dass** die zumindest eine Recheneinheit (5) mit einer Bremsvorrichtung des Schienenfahrzeugs verbunden ist.

**14.** Vorrichtung nach Anspruch 12 oder 13, **dadurch gekennzeichnet, dass** die zumindest eine Recheneinheit (5) mit einer Fahrzeugantenne des Schienenfahrzeugs verbunden ist.

**15.** Vorrichtung nach einem der Ansprüche 12 bis 14, **dadurch gekennzeichnet, dass** die zumindest eine Recheneinheit (5) mit einer Ausgabeeinheit verbunden ist, auf welcher Informationen über einen Entgleisungszustand des Schienenfahrzeugs ausgebbar sind.

## FIG 1

## FIG 2

# FIG 3

$a_{z1}, a_{z2}$

$V_{f1}, V_{f2}$

$S_{f1}, S_{f2}$

FIG 4

| | Europäisches Patentamt European Patent Office Office européen des brevets | **EUROPÄISCHER RECHERCHENBERICHT** | **Nummer der Anmeldung** EP 23 19 2628 |

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | AT 521 877 A1 (SIEMENS MOBILITY AUSTRIA GMBH [AT]) 15. Mai 2020 (2020-05-15) * Seite 1, Zeile 4 – Seite 21, Zeile 37; Ansprüche 1-17; Abbildungen 1-3 * ----- | 1-15 | INV. B61L15/00 G01P15/08 B61F9/00 |
| Y | DE 10 2014 108685 A1 (KNORR BREMSE SYSTEME FÜR SCHIENENFAHRZEUGE GMBH [DE]) 24. Dezember 2015 (2015-12-24) * Absatz [0001] – Absatz [0040]; Abbildungen 1-4 * ----- | 1-15 | |
| A | DE 199 53 677 C1 (DEUTSCHE BAHN AG [DE]) 21. Juni 2001 (2001-06-21) * Spalte 1, Zeile 6 – Spalte 6, Zeile 45; Abbildungen 1-4b * ----- | 1-15 | |

**RECHERCHIERTE SACHGEBIETE (IPC)**

B61L
G01P
B61K
B61F

Der vorliegende Recherchenbericht wurde für alle Patentansprüche erstellt

| Recherchenort | Abschlußdatum der Recherche | Prüfer |
|---|---|---|
| München | 19. Januar 2024 | Kassner, Holger |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 19 2628

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-01-2024

| Im Recherchenbericht angeführtes Patentdokument | Datum der Veröffentlichung | Mitglied(er) der Patentfamilie | Datum der Veröffentlichung |
|---|---|---|---|
| AT 521877 A1 | 15-05-2020 | AT 521877 A1 | 15-05-2020 |
| | | CA 3118032 A1 | 07-05-2020 |
| | | CN 112912297 A | 04-06-2021 |
| | | EP 3847074 A1 | 14-07-2021 |
| | | ES 2950749 T3 | 13-10-2023 |
| | | US 2021394805 A1 | 23-12-2021 |
| | | WO 2020089035 A1 | 07-05-2020 |
| DE 102014108685 A1 | 24-12-2015 | DE 102014108685 A1 | 24-12-2015 |
| | | EP 3158344 A1 | 26-04-2017 |
| | | ES 2897703 T3 | 02-03-2022 |
| | | WO 2015193333 A1 | 23-12-2015 |
| DE 19953677 C1 | 21-06-2001 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004101343 A1
- DE 19953677 C1
- WO 2020089035 A1